# EUROPEAN PATENT APPLICATION

(11) **EP 0 658 050 A1**
(43) Date of publication of application: **14.06.1995**
(21) Application number: 93309844.4
(22) Date of filing: 07.12.1993
(51) Int. Cl.: H04N 5/74, H04N 13/04

(54) **Simulated stereoscopic television production method and structure**

(71) Applicant: Wu, Hsien-Jung, Yeong Her, Taipei (TW)
(72) Inventor: Wu, Hsien-Jung, Yeong Her, Taipei (TW)
(74) Representative: Harding, Richard Patrick

(57) **Abstract**

The principle of differential angular deviation due to the difference in horizontal distance between the two eyes of a human being is utilized in a simulated stereoscopic television production system in which an image which is produced on a plane surface by a monoscope is subjected to double angle refraction by lenses to form an image similar at both its left and right sides with each angle corresponding to each of the two eyes to produce a simulated stereoscopic effect. In a preferred embodiment, the image which is projected by the picture tube 11 is magnified by a lens unit 2 and applied to a tunnel unit 3 formed by two circular arc stripe mirrors and a horizontal stripe mirror to form a sense of depth of the image. The horizontal stripe mirror serves the function of stabilizing the image within the tunnel unit 3 for viewing purposes.

## Description

### Background of the Invention

Generally speaking, the method of making stereo image is to make use of the principle of angular deviation produced from the difference in horizontal distance between the two eyes of human beings, where more than two cameras are employed for taking double-angle photographs, which will be projected to correspond with the two eyes of the viewers. Analysis will have to be made through the process of special lens (such as stereo opticals) to produce stereoscopic effect.

However, three defects are found in this conventional method. Firstly, the expenses for photograph taking is expensive. The cost for the camera and the material is two times higher than that of single camera operation, accounted for a comparatively higher expenses in proportion to its production cost. Secondly, a special pair of opticals will have to be put on while viewing the picture. Speaking in terms of the viewers, this greatly reduced its convenience, and consequently its circulation and availability to all. Thirdly, now it still takes time to put it into practice as modification is required for its photographic transmission system.

In view of the above defects, the inventor made up his mind to overcome the defects by contributing his time and energy in his renovation. Through repeated studies and experiments he managed to make the present invention, which, besides magnifying the image several times at a comparatively lower cost, will also enable the image to produce an in-depth and stereoscopic effect at a more economical and convenient mode without making any changes to the existing system.

### SUMMARY OF THE INVENTION

It is an object of the present invention to produce an 'imitated stereoscopic' effect as though the picture were watched by one eye by means of an analyzing process made to the horizontal stripes.

It is another object of the present invention is to control at will the availability or unavailability of the forementioned by means of the position moving of either separation or piling of the straight-stripe combination lens.

It is a further object of the present invention to enable easy availability of picture with imitated stereoscopic image by means of the features of the structure of the present invention, as well as merely utilizing a monocular camera to produce pictures with 'imitated sterescopic' effect as though produced by horizontal-stripe analytical lens without using two or three cameras for shooting, and thus resulted in cutting down a lot of cost.

It is still another object of the present invention to make the audience watch their television very much at ease without wearing any stage properties by mans of the 'imitated stereoscopic' effect directly produced by the tunnel unit in coordination with the horizontal-stripe lens and the lens unit.

### SUMMARY OF THE INVENTION

The present invention relates to a "Tunnel Type Imitated Stereoscopic Television Production Method and Structure", which makes use of the principle of angular deviation produced from the differnce in horizontal disdance between the two eyes of human beings. Through the lenses set therein the plane surface view produced by a monocular camera will be refracted in double angle to form the effects of 'imitated stereoscope' from the same view which bears similarity in both its left side and right side, while its angle will be directed to correspond separatively with the left eye and the right eye of the viewers. In embodiment, the shadow projected by the picture tube will be magnified by a unit of lense, and will further be drawn forward to a tunnel which is formed by two circular arc stripe mirrors and a mirror with horitzontal stripes to produce an in-depth effect. And the forementioned mirror with horizontal stripes will stabilize the image within the tunnel for viewing, so as to ultimately produce an 'stereoscopic imitation' effect.

In addition, by means of the principle and structure of the present invention, one camera will only be utilized for photograph taking without making any changes to the existing photographic and transission system. And the structure of the present invention can be used for viewing any of the existing television or video tape programs is deemed as still another object of the present invention.

### BRIEF DESCRIPTION OF THE DRAWINGS

FIG. 1 is an indicative drawing of the principle of the present invention.

FIG. 2 is a sectional view of the structure of the present invention.

FIG. 3 is a solid view of the preferred embodiments of the present invention.

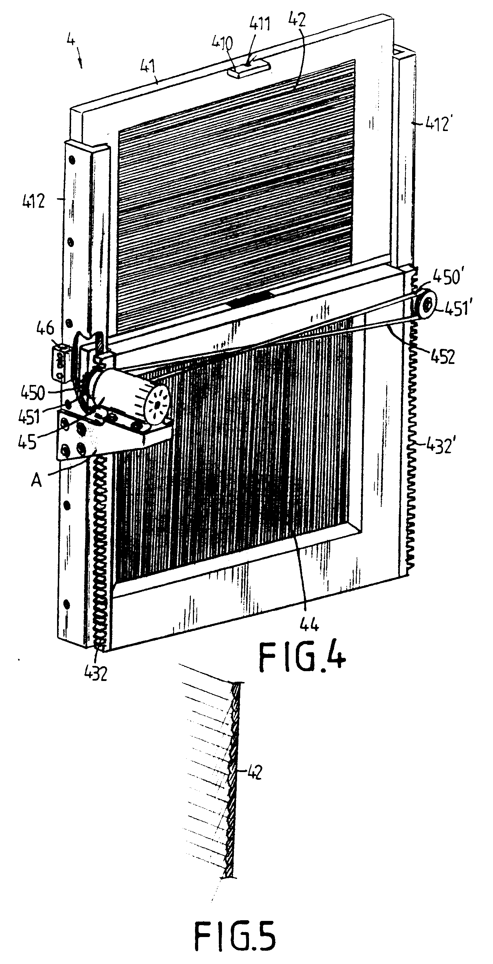

FIG. 4 is a detailed view of the analytical unit of the present invention.

FIG. 5 is a magnifying view of the horizontally analytical sectional view of the present invention.

FIG. 6 is a segmentation solid view of the movable frame of the present invention.

FIG. 7 is an outer view of the movable frame of the present invention.

### DETAILED DESCRIPTION OF THE PRESENT INVENTION

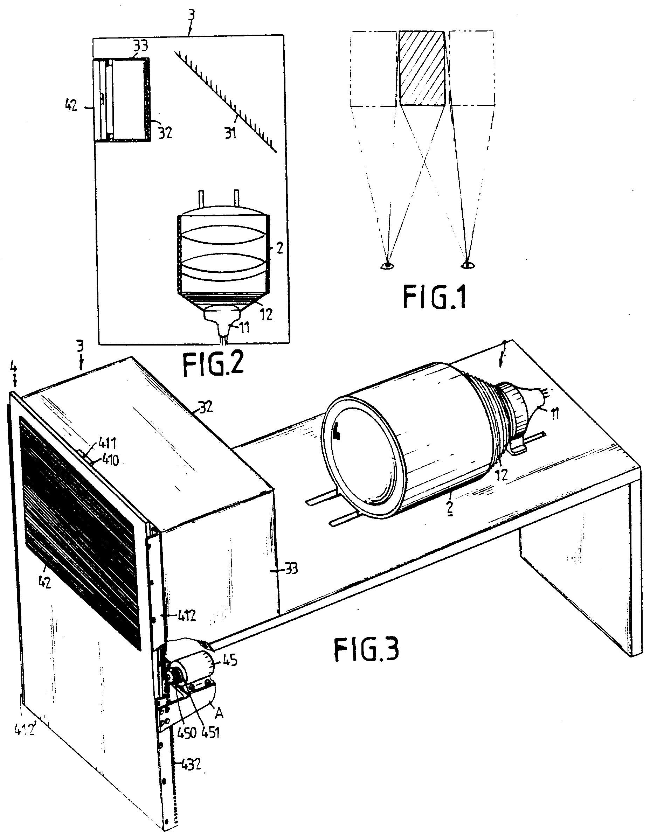

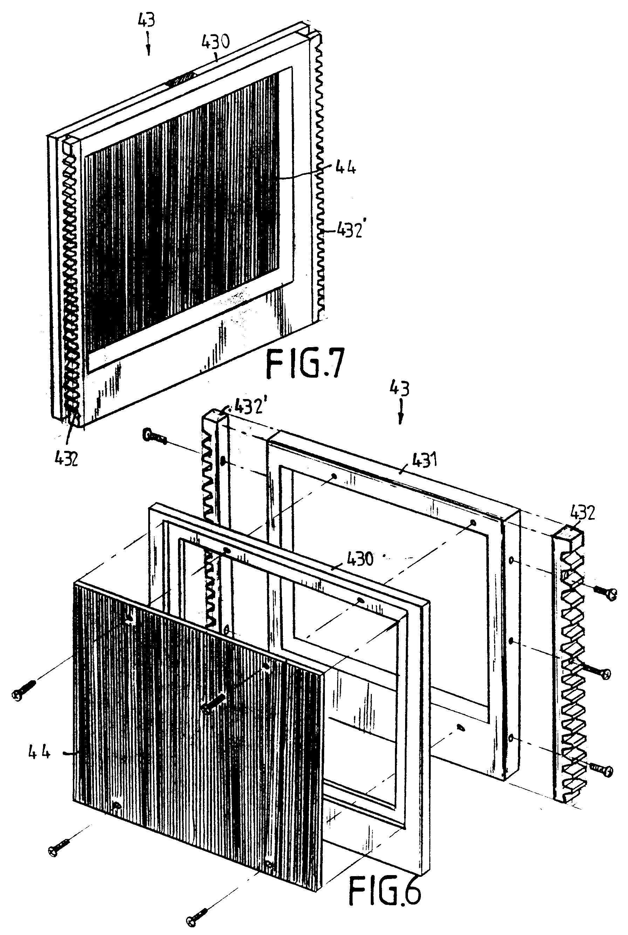

The present invention relates to a 'Tunnel Type Monocular Imitated Steroscopic Television Production Method and Structure'. It is a production method which abandons that which produces the orthodox stereoscopic effect to merely produce a monocular type of imitated stereoscopic effect. That is to say, by means of the principle of angular deviation produced from the difference in horizontal distance between the two eyes of human beings, their two eyes will be used for viewing in a way as though they were using one eye. The plane surface view taken by monocular camera will be refracted under double-angled analysis through lenses to form the same view (as indicated in FIG. 1) which bears similarity in its left and right sides but is directed to correspond separately with either side of the two eyes to produce an 'imitated stereoscopic' effect. It comprises of original image unit 1, a lens unit 2, a tunnel unit 3, and an image stabilizing unit 4, of which the original image unit 1. comprises of picture tube 11. and shelter 12;
Similar to the ordinary picture tubes, picture tube 11. is to show the plane surface view;
Shelter 12. is a square-shaped funnel having its bottom part connected with picutre tube 11, and its top connected with lens unit 2 to shelter the light outside picture tube 11. to avoid disturbing the picture image;
Lens unit 2. comprises of a certain number of Plano-concave lenses, biconvex lenses and Plano-convex lenses. By means of the bay of its lenses and the adjustability of the distance between lens unit 2. and picture tube 11, the plane picture being shown by the picture tube can be magnified and pulled forward to the tunnel unit 3; Tunnel unit 3. comprises of reflected mirror 31, circular arc-stripe mirror 32. and tunnel 33. Refracted lens 31. is set to prevent the overall structural body of the present invention from being excessively thick. It is an obliquely placed fully refracted plain lens used for reflecting the image being pulled forward into tunnel 33. by the lens unit in an appropriate manner;
Circular arc-stripe lens 32. is placed at the rear of tunnel 33. for projecting the image reflected by reflected lens 31. into tunnel 33;
Tunnel 33. is a square-shaped box having a circular arc-stripe lens 32. placed at its rear. Its front is connected with image stabilizing unit 4 to serve as standard of reference for visual depth, and will enhence its stereoscopic effort;
The image stabilizing unit 4. comprises of unit framework 4, horizontal-stripe lens 42, movable frame 43, striaght-stripe mirror 44, and DC motor 45, of which unit frame 41. is a long retangular plate, with a horizontal-stripe lens 42. fixed in the upper direction of each of the upper and lower of the plate body, and a permanent magnet 410. fixed in the internal edge on the upper and lower end of the plate surface to attract movable frame 43. and control the starting switch 411. of the power supply for motor 45. Moreover, a push-button switch 411. is functioned to move upward, downward and stop is connected with motor 45. By means of the forementioned push-button to move upward, downward and stop, the obverse, reverse and stop operation of motor 45. can be controlled separately. A L-shaped 412. 412' is fixed with screw at each of the left and right side the plate body to enable the forming of a space between L-shaped body 412. and 412' for placing movable frame 43;
The cross section of horizontal stripe lens 42. is formed by a plurality of Plano-convex lens, and extends horizontally to form stripe shape as indicated in FIG. 5. Its function is to stabilize the position of image for viewing purpose;
Movable frame 43. comprises of an article square in shape in both its interior and exterior 430. 431, a straight-stripe combination lens 44. fixed therein and gear racks 432. 432' which is set at its two lateral sides for the linking-up of DC motor 45. to enable it to conduct up and down position moving as indicated in FIG. 6;
The cross section of straight-stripe combination lens 44. is formed by the connection of plano-convex lens, and extends straight to form stripe shape. After making vertical piling with horizontal-stripe lens 42, it will produce a combined effect to enable the picture to resume a plane state (as though the image is projected onto an an ordinary screen);
D.C. motor 45. is set beside movable frame 43. and unit frame 41. by means of fixing frame A. on L-shaped body 412. Its axle end is having a pinion 450 and a belt wheel 451. Pinion 450' and belt belt wheel 451' are fixed by a seated gear at a position equivalent in height to that of motor 45. While belt wheels 451. and 451' are connected by crossed belt 452 to make pinions 450. reverse its turning direction to that of pinion 450' to allow them to be in engagement with gear racks 432. and 432' of movable frame 43 to drive movable frame 43. for up and down position moving, so as to further enable horizontal-stripe lens 42. and straight-stripe combination lens 44. to maintain the interrelation of separation and vertical piling.

Upon operation, control the downard operation key of push-button switch 46. to control DC motor 45. to enable movable frame 43. to move downward to and be attracted by the permanent magnet 410. at the bottom edge of unit frame 41. and, at the same time, be driven to governing switch 411. to enable movable frame 43. to strengthen its positioning, and at the same time also cut off the power supply of DC motor 45. and stop its operation. At this time, straight-stripe combination lens will separate from horizontal-stripe lens 42. Through such processes as the magnifying and forward pulling of lens unit 2 as well as the refraction made by refracting lens 31. and the projection of two circular arc-stripe lens 32, the plane picture which is being shown by tbe picture tube will make access into tunnel 33, to ultimately produce an 'imitated stereoscopic' effect through the analysis and stabilizing of horizontal-stripe lens 42. Upon pushing the upward moving key of push-button switch 46, it will exert a control over the DC motor 45. to make a reverse turning to enable movable frame 43. to move upward until it moves to and be attracted by permanent magnet 410. at the upper end of unit frame 41. And, at the same time, get in touch with governing wswitch 411, so as to strengthen the positioning capability of movable frame 43, and also stop the operation of DC motor 45. by cutting off its power supply. Then, straight-stripe combination lens 44. will pile with horizontal-stripe analyzing lens 42. Thereupon, neither analyzing state nor any 'imitated stereoscopic effect' will be produced by the forementioned plain picture. But a comparatively broad angle will be provided for viewing.

## Claims

1. A tunnel type monocular simulated stereoscopic television production system wherein the image which is produced on a plane surface by a monoscope is subjected to double angle refraction by lens means to form an image similar at both its left and right sides with each angle corresponding to each of the two eyes to produce a simulated stereoscopic effect.

2. A system according to claim 1, wherein the plane surface image is magnified, applied to a reflecting mirror for further reflection by two circular arc lenses to enable its projection in a tunnel unit to form an image with indepth effects.

3. A system according to claim 1 or 2, wherein the system comprises an original image unit (1), a lens unit (2), a tunnel unit (3) and an image stabilizing unit (4).

4. A system according to claim 3, wherein the original image unit (1) comprises a picture tube (11) and a shelter part (12) which is a square funnel shaped member with one end connected to the picture tube (11) and the other end connected to the lens unit (2).

5. A system according to claim 3 or 4, wherein the lens unit (2) comprises a number of plano-concave lenses, double-convex lenses and/or plano-convex lenses, both the distance between the lenses and the distance between the lenses and the picture tube being adjustable.

6. A system according to claim 3, 4 or 5, wherein the tunnel unit (3) comprises a reflecting lens (31), two circular arc lenses (32) and a tunnel member (33), the reflecting lens (31) being a fully reflected plane lens which is placed obliquely, the two circular arc lenses (32) being placed at the rear of the tunnel member (33), and the tunnel member (33) being a square shaped member with the two circular arc lenses (32) set at its rear and the image stabilizing unit (4) set at its front.

7. A system according to claim 3, 4, 5 or 6, wherein the image stabilizing unit (4) comprises a unit frame (41), horizontal stripe lens means (42), a movable frame (43), straight stripe combination lens means (44) and a DC motor (45), the unit frame (41) being a rectangular plate with the horizontal stripe lens means (42) set within the upper part of the plate.

8. A system according to claim 7, wherein a permanent magnet (410) is fixed to the plate to attract the movable frame (43) and control the switch (411) of the power supply of the motor (45).

9. A system according to claim 7 or 8, wherein an L-shaped body (412) is attached to the plate to enable the space between the plate and the L-shaped body to form a space to accommodate the movable frame (43), the movable frame (43) being a square framed body with the straight stripe combination lens means (44) fixed therein.

10. A system according to claim 7, 8 or 9, wherein the DC motor (45) is fixed to a fixing frame A disposed to one side of the unit frame (41) and the movable frame (43) and is coupled to pinions (450, 450') provided on respective sides of the movable frame (43) to effect movement of the frame (43) by counter-rotation of the pinions.
